# EUROPEAN PATENT APPLICATION

(11) **EP 4 752 059 A1**
(43) Date of publication of application: **03.06.2026**
(21) Application number: 25214752.5
(22) Date of filing: 10.11.2025
(51) Int. Cl.: B64D 13/06, B01D 45/08

(54) **PLATE-FIN COALESCER FOR AIRCRAFT ENVIRONMENTAL CONTROL SYSTEMS**

(30) Priority: 27.11.2024 US 202418963091
(71) Applicant: Hamilton Sundstrand Corporation, Charlotte, NC 28217-4578 (US)
(72) Inventor: ARMY, Donald E., Enfield, 06082 (US); PEACOS III, Frederick, North Scituate, 02857 (US)
(74) Representative: Dehns

(57) **Abstract**

Aircraft air cycle machines include a first stage turbine (126), a second stage turbine (132), and a duct (204) arranged between the first stage turbine (126) and the second stage turbine (132). A plate-fin coalescer (210) is arranged along the duct (204). The plate-fin coalescer (210) includes a housing (302), a first fin layer arranged within the housing (302), a second fin layer arranged within the housing (302), and a first parting sheet arranged between the first fin layer and the second fin layer. Each of the first fin layer and the second fin layer include a plurality of fin elements (402) arranged in substantially parallel orientation relative an axis through the housing (302), and channels (406) are defined between adjacent fin elements of the plurality of fin elements (402) of each of the first fin layer and the second fin layer. Moisture carried on a flow through the channels (406) will impinge upon surfaces of the fin elements and coalesce into water droplets for removal.

## Description

### BACKGROUND

The subject matter disclosed herein generally relates to aircraft machines and, more particularly, to aircraft environmental control systems for supplying conditioned air to an aircraft cabin.

Aircraft are configured with multiple machines that are used to generate power, perform work, generate or treat air or other fluids for use onboard the aircraft, and the like. For example, environmental control systems (ECS) are configured provide a supply of conditioned air to an enclosure, such as an aircraft cabin and/or cockpit. An air cycle machine (ACM) is an integral part of the ECS. Conventional ACMs may include one or more turbines that are used to expand an air flow after the air is pretreated. As the airflow passes through the ACM, moisture needs to be removed so that a proper humidity level is maintained within the aircraft enclosure. Accordingly, ACMs (or environmental control systems) are conventionally configured with water separators, water collectors, and the like, which are arranged and configured to remove moisture from an airflow as it passes through the ECS. Typically, the moisture is removed by reducing the temperature of the airflow by means of a heat exchanger or the like and a water separator, where the water carried by the airflow will be formed into droplets (e.g., by condensation, coalescing, etc.). The water is then removed by a water separator and/or water collector, which directs liquid water along one flow path for use, storage, or other purpose (or expelled overboard) and the treated air is directed to the enclosure of the aircraft. Improved water removal mechanisms may help improve aircraft system efficiencies.

### SUMMARY

According to some embodiments, aircraft air cycle machines are provided. The aircraft air cycle machines include a first stage turbine configured to receive and expand air, a second stage turbine configured to receive air from the first stage turbine, a duct arranged between the first stage turbine and the second stage turbine, and a plate-fin coalescer arranged along the duct. The plate-fin coalescer includes a housing, a first fin layer arranged within the housing, a second fin layer arranged within the housing, and a first parting sheet arranged between the first fin layer and the second fin layer. Each of the first fin layer and the second fin layer include a plurality of fin elements arranged in substantially parallel orientation relative an axis through the housing, and channels are defined between adjacent fin elements of the plurality of fin elements of each of the first fin layer and the second fin layer, and the channels are tortuous channels arranged such that moisture carried on a flow through the channels will impinge upon surfaces of the fin elements and coalesce into water droplets.

In addition to one or more of the features described herein, or as an alternative, further embodiments of the aircraft air cycle machines may include that the plate-fin coalescer comprising an inlet header and an outlet header, wherein the inlet header is configured to couple to the duct.

In addition to one or more of the features described herein, or as an alternative, further embodiments of the aircraft air cycle machines may include a water separator arranged downstream from the outlet header of the plate-fin coalescer.

In addition to one or more of the features described herein, or as an alternative, further embodiments of the aircraft air cycle machines may include a swirl vane assembly arranged between the outlet header of the plate-fin coalescer and the water separator.

In addition to one or more of the features described herein, or as an alternative, further embodiments of the aircraft air cycle machines may include that the swirl vane assembly comprises at least one swirl vane arranged to impart a swirl to an airflow exiting the outlet header of the plate-fin coalescer prior to entering the water separator.

In addition to one or more of the features described herein, or as an alternative, further embodiments of the aircraft air cycle machines may include that the plate-fin coalescer further includes a second parting sheet arranged within the housing and a third fin layer installed within the housing, wherein the second parting sheet is arranged between the second fin layer and the third fin layer.

In addition to one or more of the features described herein, or as an alternative, further embodiments of the aircraft air cycle machines may include that each fin layer is formed from a sheet material having a thickness of 0.05-0.10mm (0.002-0.004 inch).

In addition to one or more of the features described herein, or as an alternative, further embodiments of the aircraft air cycle machines may include that the parting sheet is formed of a sheet material having a thickness of 0.25-0.51mm (0.010-0.020 inch).

In addition to one or more of the features described herein, or as an alternative, further embodiments of the aircraft air cycle machines may include that each fin element is configured with a sinusoidal shape to define the tortuous channels having a sinusoidal shape.

In addition to one or more of the features described herein, or as an alternative, further embodiments of the aircraft air cycle machines may include that each fin element is configured with a shape to define the tortuous channels such that no line-of-sight path is defined along the channels from an inlet to an outlet thereof.

According to some embodiments, aircraft environmental control systems are provided. The aircraft environmental control systems include a heat exchanger assembly configured to receive ram air along a first path of the heat exchanger assembly and compressed air along a second path of the heat exchanger assembly, wherein the first path comprises a compressed air inlet on a first heat exchanger, and the compressed air is directed into the compressed air inlet, the compressed air being directed from the first heat exchanger into a second heat exchanger and an air cycle machine configured to receive the compressed air from an outlet of the second heat exchanger. The air cycle machine includes a first stage turbine configured to receive and expand the compressed air received from the second heat exchanger, a second stage turbine configured to receive air from the first stage turbine, a duct arranged between the first stage turbine and the second stage turbine, and a plate-fin coalescer arranged within the duct. The plate-fin coalescer includes a housing, a first fin layer arranged within the housing, a second fin layer arranged within the housing, and a first parting sheet arranged between the first fin layer and the second fin layer. Each of the first fin layer and the second fin layer includes a plurality of fin elements arranged in substantially parallel orientation relative an axis through the housing, and channels are defined between adjacent fin elements of the plurality of fin elements of each of the first fin layer and the second fin layer. The channels are tortuous channels such that moisture carried on a flow through the channels will impinge upon surfaces of the fin elements and coalesce into water droplets.

In addition to one or more of the features described herein, or as an alternative, further embodiments of the aircraft environmental control systems may include that the plate-fin coalescer comprising an inlet header and an outlet header, wherein the inlet header is configured to couple to the duct.

In addition to one or more of the features described herein, or as an alternative, further embodiments of the aircraft environmental control systems may include a water separator arranged downstream from the outlet header of the plate-fin coalescer.

In addition to one or more of the features described herein, or as an alternative, further embodiments of the aircraft environmental control systems may include a swirl vane assembly arranged between the outlet header of the plate-fin coalescer and the water separator.

In addition to one or more of the features described herein, or as an alternative, further embodiments of the aircraft environmental control systems may include that the swirl vane assembly comprises at least one swirl vane arranged to impart a swirl to an airflow exiting the outlet header of the plate-fin coalescer prior to entering the water separator.

In addition to one or more of the features described herein, or as an alternative, further embodiments of the aircraft environmental control systems may include that the plate-fin coalescer includes a second parting sheet arranged within the housing and a third fin layer installed within the housing, wherein the second parting sheet is arranged between the second fin layer and the third fin layer.

In addition to one or more of the features described herein, or as an alternative, further embodiments of the aircraft environmental control systems may include that each fin layer is formed from a sheet material having a thickness of 0.05-0.10mm (0.002-0.004 inch).

In addition to one or more of the features described herein, or as an alternative, further embodiments of the aircraft environmental control systems may include that the parting sheet is formed of a sheet material having a thickness of 0.25-0.51mm (0.010-0.020 inch).

In addition to one or more of the features described herein, or as an alternative, further embodiments of the aircraft environmental control systems may include that each fin element is configured with a sinusoidal shape to define the tortuous channels having a sinusoidal shape.

In addition to one or more of the features described herein, or as an alternative, further embodiments of the aircraft environmental control systems may include that each fin element is configured with a shape to define the tortuous channels such that no line-of-sight path is defined along the channels from an inlet to an outlet thereof.

The foregoing features and elements may be combined in various combinations without exclusivity, unless expressly indicated otherwise. Features which are described in the context of separate aspects and embodiments may be used together and/or be interchangeable. Similarly, features described in the context of a single embodiment may also be provided separately or in any suitable subcombination. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1A is a schematic diagram of an environmental control system that may incorporate embodiments of the present disclosure;
FIG. 1B is a schematic illustration of a mechanical embodiment of the environmental control system shown in FIG. 1A;
FIG. 2 is a schematic illustration of a portion of an environmental control system in accordance with an embodiment of the present disclosure;
FIG. 3A is a schematic illustration of a plate-fin coalescer in accordance with an embodiment of the present disclosure;
FIG. 3B is another view of the plate-fin coalescer of FIG. 3A;
FIG. 4A is a schematic illustration of a fin layer of a plate-fin coalescer in accordance with an embodiment of the present disclosure;
FIG. 4B is an enlarged illustration of the region labeled 4B in FIG. 4A of the fin layer;
FIG. 5 is a schematic illustration of a water collector for use with a plate-fin coalescer in accordance with an embodiment of the present disclosure; and
FIG. 6 is a schematic illustration of another configuration of a fin element of a plate-fin coalescer in accordance with an embodiment of the present disclosure.

### DETAILED DESCRIPTION

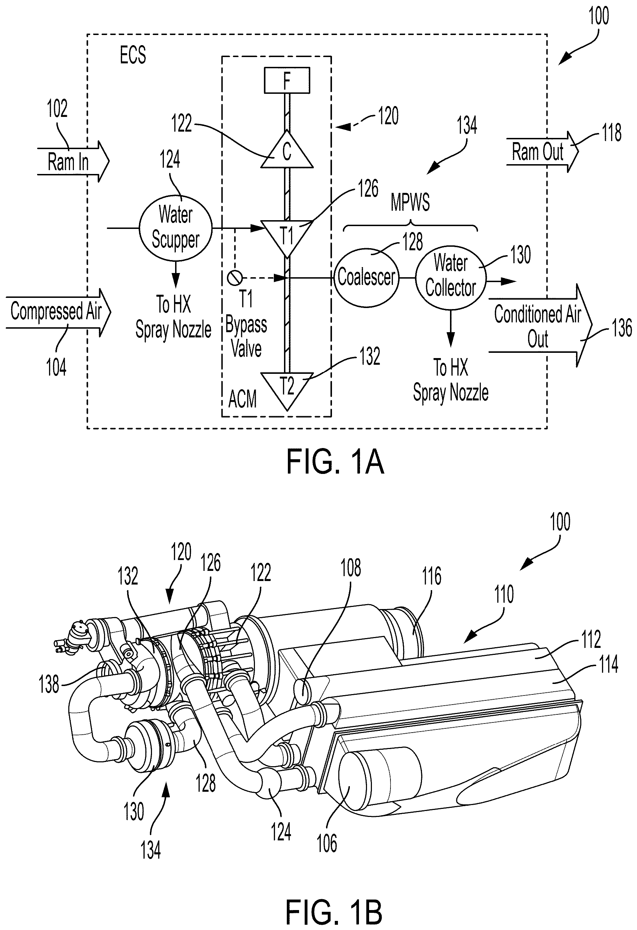

Referring to FIGS. 1A-1B, schematic illustrations of a portion of an aircraft environmental control system (ECS) 100 that may incorporate embodiments of the present disclosure are shown. FIG. 1A is a schematic diagram of the ECS 100 and FIG. 1B is a structural illustration of one configuration of the ECS 100. The ECS 100 is configured to supply conditioned air to an enclosure or space of an aircraft, such as an aircraft cabin and/or cockpit. As shown, the ECS 100 may receive input ram air 102 and input compressed air 104. The input ram air 102 may enter the ECS 100 at a ram air inlet 106 and the input compressed air 104 may enter the ECS 100 at a compressed air inlet 108. The input ram air 102 and the input compressed air 104 may be thermally coupled within a heat exchanger assembly 110. The compressed air may be preconditioned within the heat exchanger assembly 110 within a first heat exchanger 112 and a second heat exchanger 114 that are arranged between the ram air inlet 106 and a ram air outlet 116. The ram air may exit the ECS 100 as output ram air 118. The compressed air is first treated within the heat exchanger assembly 110 and an air cycle machine (ACM) 120.

In operation the input compressed air 104 enters the first heat exchanger 112 of the heat exchanger assembly 110, where the compressed air is partially treated by the ram air passing through the heat exchanger assembly 110. The partially treated air exits the first heat exchanger 112 and is directed into a compressor 122 of the ACM 120. The partially treated air is compressed within the compressor 122 of the ACM 120 and then directed into the second heat exchanger 114 of the heat exchanger assembly 110. The air is then directed out of the second heat exchanger 114, through a water scupper 124 and into a first stage turbine 126 of the ACM 120. The partially treated and compressed air is expanded within or across the first stage turbine 126, and then directed through a coalescer 128, passed through a water collector 130, and into a second stage turbine 132 of the ACM 120.

The coalescer 128 and the water collector 130 define a mid-pressure water collector assembly 134. The mid-pressure water collector assembly 134 is arranged between the first stage turbine 126 and the second stage turbine 132 of the ACM 120, and thus is arranged at a mid-pressure level, which is after expansion within the first stage turbine 126 but before further (or second) expansion within the second stage turbine 132. After the second expansion within the second stage turbine 132, conditioned air 136 is directed out of the ECS 100 via a conditioned air outlet 138. The mid-pressure water collector assembly 134 is configured to coalesce fog or moisture from the partially conditioned air that is output from the first stage turbine 126. Accordingly, the mid-pressure water collector assembly 134 is configured to remove free moisture from the airflow as it passes through the ACM 120.

Embodiments of the present disclosure are directed to the mid-pressure water collector assembly 134 incorporating internal features to aid in the removal of moisture from the airflow through the ACM 120. More particularly, embodiments of the present disclosure are directed to a coalescer configuration that is arranged between the output of the first stage turbine 126 and the water collector 130 of the mid-pressure water collector assembly 134. In accordance with embodiments of the present disclosure, an internal structure in the form of a plate-fin coalescer is provided within a section of piping or conduit to aid in the removal of water droplets and free moisture in the airflow prior to final processing and expansion within the second stage turbine 132 and then subsequent delivery to a space to be provided with the conditioned air 136.

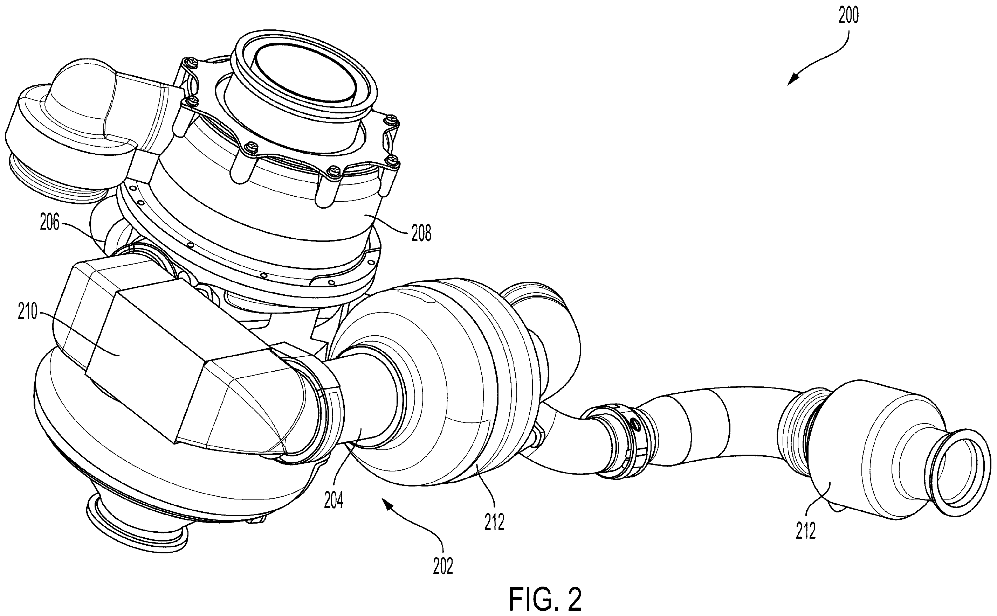

Referring now to FIG. 2, a schematic illustration of a portion of an ECS 200 in accordance with an embodiment of the present disclosure is shown. The ECS 200 may be similar to that shown and described above, and the illustration of FIG. 2 is an enlarged detailed illustration of a mid-pressure water collector assembly 202 of the ECS 200. The mid-pressure water collector assembly 202 is arranged along a duct 204 that fluidly connects a first stage turbine 206 with a second stage turbine 208, such as shown in FIG. 1. The duct 204 includes a plate-fin coalescer 210 and a water separator 212 arranged along the duct 204 between the first stage turbine 206 and the second stage turbine 208. The water separator 212 may be configured as a centrifugal water separator.

In accordance with the embodiment of FIG. 2, the mid-pressure water collector assembly 202 includes the plate-fin coalescer 210, the duct 204, and the water separator 212. The plate-fin coalescer 210, in accordance with embodiments of the present disclosure, is arranged upstream from the water separator 212. The plate-fin coalescer 208 is configured to cause moisture that is contained within treated, moist air that is received from the first stage turbine 206 to condense and/or coalesce into droplets or the like. The condensed or coalesced water may then be captured by the water collector 212 and removed from the airflow, thus providing a treated and dried air to the second stage turbine 208.

The plate-fin coalescer is configured with a series or set of parallel fin layers that are separated by thin, parallel arranged parting sheets. The parting sheets may be plate structures. The fin layers, supported on and between the parting sheets may be installed within a support housing that contains and houses the assembly therein. The support housing may be part of the duct 204 or defines a portion of a fluid flow path from the first stage turbine 206 to the second stage turbine 208. As the moist air enters and flows through the plate-fin coalescer 210, the moisture will impinge upon surfaces of the fin layers to form into water droplets. The water droplets may then be carried through the plate-fin coalescer 210 and enter the water separator 212 where the droplets are removed from the airflow such that treated and dried air is output from the water separator 212 and supplied into the second stage turbine 208.

In the configuration of FIG. 2, a supply of pretreated air may be received from a heat exchanger assembly and passed through a water scupper 214. The air will then be directed into the first stage turbine 206 where the air is expanded and then directed into and through the mid-pressure water collector assembly 202, where moisture is removed as the air passes through the plate-fin coalescer 210 and the water separator 212. The dried air that exits the water separator 212 is then directed into the second stage turbine 208 for further expansion and then may be directed to downstream systems or locations, such as a space to receive treated air onboard an aircraft (e.g., passage compartment, cabin, cockpit, etc.).

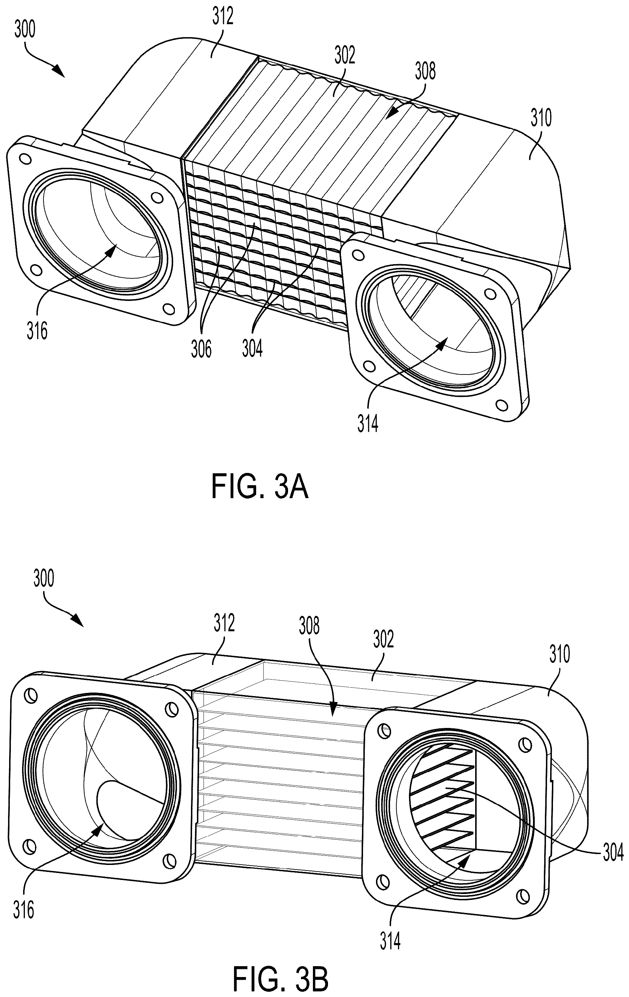

Referring now to FIGS. 3A-3B, schematic illustrations of a plate-fin coalescer 300 in accordance with an embodiment of the present disclosure are shown. The plate-fin coalescer 300 may be used within an air cycle machine and/or environmental control system of an aircraft, such as in the systems shown and described above. The plate-fin coalescer 300 is configured to be installed within or along a duct at a mid-pressure location, such as between a first stage turbine and a second stage turbine of an air cycle machine. FIG. 3A perspective top view of the plate-fin coalescer 300 and FIG. 3B is another perspective view of the plate-fin coalescer 300.

The plate-fin coalescer 300 includes a housing 302. The housing 302 is substantially rectangular in shape. Arranged and stacked within the housing 302, the plate-fin coalescer 300 includes a number of parting sheets 304 and a number of fin layers 306. The plate-fin coalescer 300 defines a series of tortuous flow paths that are defined between the adjacently stacked parting sheets 304 and adjacent fin elements of the fin layers 306. The parting sheets 304 and the fin layers 306 are arranged as stacked structures that are layered within the housing 302. Accordingly, a coalescer sheet assembly 308 is provided within the housing 302.

The coalescer sheet assembly 308 (comprising the parting sheets 304 and the fin layers 306) within the housing 302 is arranged between an inlet header 310 and an outlet header 312, in a flow direction. In operation, moist air may be received into an inlet plenum 314 within the inlet header 310 and then flow into, through, and between the parting sheets 304 and the fin layers 306 of the coalescer sheet assembly 308 (i.e., through tortuous flow paths within the coalescer sheet assembly 308). As the moist air passes through the tortuous flow paths, moisture and water droplets will impinge upon surfaces of the fin elements of the fin layers, resulting in larger water droplets and/or rivulets forming or coalescing. These larger droplets will be carried in the flow direction out of the coalescer sheet assembly 308 and into an outlet plenum 316 defined by the outlet header 312. The air carrying water droplets may then be directed into a downstream component, such as a water separator, where the water is extracted or removed, and relatively dry air may be supplied into a second stage turbine of an air cycle machine, and subsequently delivered to an aircraft environment (e.g., cabin, cockpit, etc.).

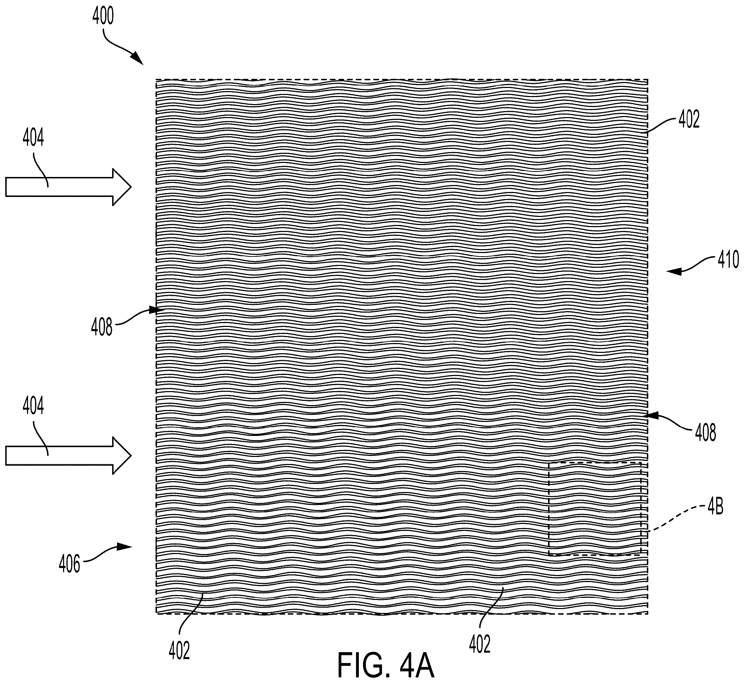

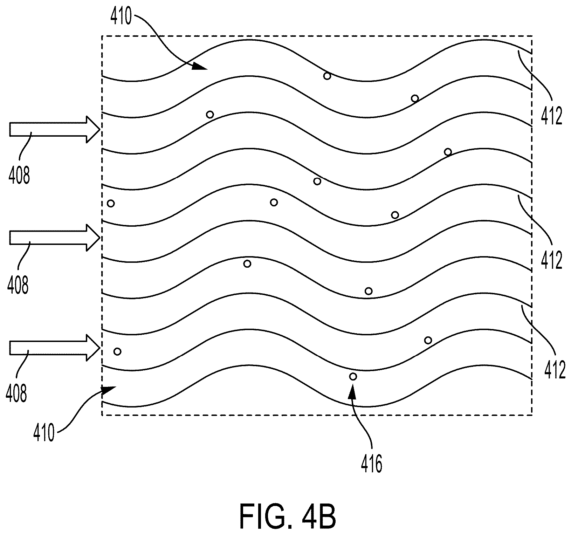

Referring now to FIGS. 4A-4B, schematic illustrations of a fin layer 400 for use in a plate-fin coalescer in accordance with an embodiment of the present disclosure are shown. FIG. 4A illustrates the fin layer 400 which may be installed between parting sheets and installed within a housing of a plate-fin coalescer as shown and described above. FIG. 4B illustrates an enlarged detailed illustration of the view labeled 4B in FIG. 4A. As shown in FIG. 4A, the fin layer 400 is formed of one or more fin elements 402 arranged in substantially parallel orientation to each other. A formed plate-fin coalescer, in accordance with embodiments of the present disclosure, may include a plurality of the fin layers 400, which may be stacked in layers within a housing. The fin layers 400 may be separated and/or support on or by parting sheets. In operation, moist air 404 enters the fin layer 400 at an inlet end 406 and passes through a set of channels 408 defined between fin elements 402 of the fin layer 400.

The fin elements 402 are axially extending sheets of material that extend from the inlet end 406 to an outlet end 410 of the fin layer 400. The fin elements 402 are arranged as curved or formed elements that define the set of channels 408 between adjacent fin elements 402. In a non-limiting example, the channels 408 are substantially sinusoidal flow paths. Because of the curved or tortuous nature of the channels 408, as the moist air 404 flows between the fin elements 402, the moisture will impinge upon the material surfaces of the fin elements 402. As the flow continues along the channels 408 from the inlet end 406 to the outlet end 410, the moisture will coalesce and combine to form droplets and/or rivulets of water 412 (FIG. 4B). The droplets of water 412 may be of sufficient size, weight, and dimension that when they enter a downstream water separator (e.g., as shown in FIG. 2) the droplets of water 412 may readily be removed from the airflow such that a relatively dry airflow may be directed downstream into a second stage turbine and then supplied to a part of an aircraft (e.g., cockpit, cabin, etc.).

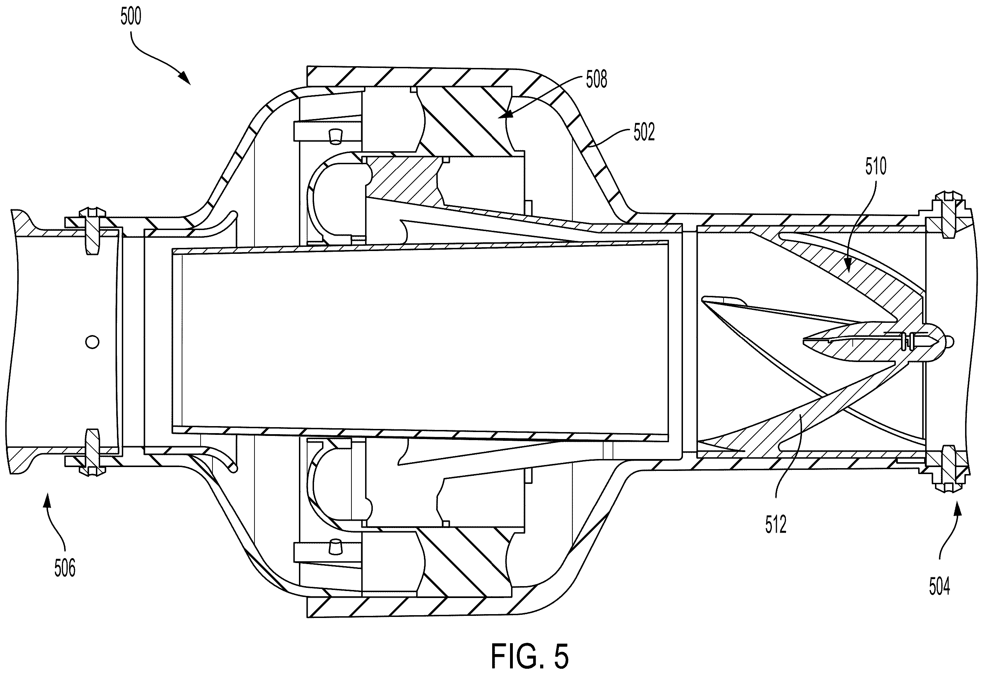

Referring now to FIG. 5, a schematic illustration of a water collector 500 installed within a duct 502 of an air cycle machine of an aircraft environmental control system is shown. The water collector 500 may be configured within or as part of a mid-pressure water collector assembly as shown and described herein. Accordingly, in accordance with some embodiments of the present disclosure, the water collector 500 may be arranged downstream from a plate-fin coalescer, with the components arranged in series in a flow direction between a first stage turbine and a second stage turbine of an air cycle machine which may be part of an aircraft environmental control system. The water collector 500 extends axially along a flow path from an inlet 504 to an outlet 506. The inlet 504 of the water collector 500 may be fluidly coupled to an outlet header of a plate-fin coalescer (e.g., FIGS. 3A-3B). As shown in FIG. 5, between the inlet 504 and a water separator structure 508, a swirl vane assembly 510 may be arranged within the duct 502. The swirl vane assembly 510 includes one or more swirl vanes 512 that are arranged to impart a swirl to a flow of air exiting an upstream plate-fin coalescer. The swirl vanes 512 may be arranged in a clockwise arrangement, a counter-clockwise arrangement, or the like. The swirl vane assembly 510 imparts a swirl to the flow through the swirl vane assembly 510 and the swirled flow will then enter the water separator structure 508, where water droplets that are coalesced within the upstream plate-fin coalescer may be extracted from the airflow, resulting in dry air to exit the water collector 500 at the outlet 506 and may be directed into a downstream second stage turbine of an air cycle machine of an aircraft environmental control system.

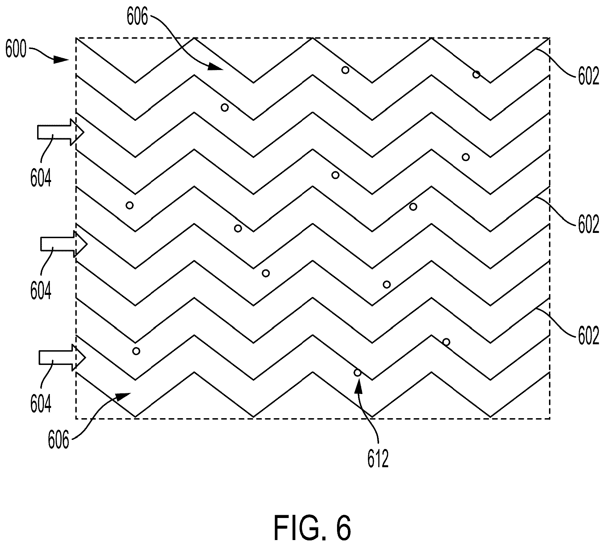

Referring now to FIG. 6, a schematic illustration of a portion of a fin layer 600 for use in a plate-fin coalescer in accordance with an embodiment of the present disclosure are shown. As shown in FIG. 6, the fin layer 600 is formed of one or more fin elements 602 arranged in substantially parallel orientation to each other. A formed plate-fin coalescer, in accordance with embodiments of the present disclosure, may include a plurality of the fin layers 600, which may be stacked in layers within a housing. The fin layers 600 may be separated and/or support on or by parting sheets, as shown and described above. In operation, moist air 604 enters the fin layer 600 at an inlet end and passes through a set of channels 606 defined between fin elements 602 of the fin layer 600.

The fin elements 602 are axially extending sheets of material that extend from the inlet end to an outlet end of the fin layer 600 (e.g., as shown in FIGS. 4A-4B). The fin elements 602 are arranged in a saw-tooth configuration or formed elements that define the set of channels 608 between adjacent fin elements 602. In this non-limiting example, the channels 608 are substantially angled or saw-tooth flow paths. Because of the tortuous nature of the channels 608, as the moist air 604 flows between the fin elements 602, the moisture will impinge upon the material surfaces of the fin elements 602. As the flow continues along the channels 608 from the inlet end to the outlet end, the moisture will coalesce and combine to form droplets and/or rivulets of water 612. The water 612 may be of sufficient size, weight, and dimension that when it enters a downstream water separator (e.g., as shown in FIG. 2) the water 612 may readily be removed from the airflow such that a relatively dry airflow may be directed downstream into a second stage turbine and then supplied to a part of an aircraft (e.g., cockpit, cabin, etc.).

In the illustrative configurations of FIGS. 4B and 6, no line-of-side or straight, unobstructed path is defined through the respective assemblies of fin elements. In FIG. 4B, the fin elements are arranged in a smooth, continuous curvature, such as in a sinusoidal pattern, with minimum and maximums that overlap between adjacent fin elements in an axial or flow direction such that air (and any carried moisture) must impinge upon surfaces of the fin element as it flows from an inlet to an outlet. In the configuration of FIG. 6, the fin elements are arranged with a toothed or saw-tooth configuration, with inflection points that overlap between adjacent fin elements in an axial or flow direction such that air (and any carried moisture) must impinge upon surfaces of the fin element as it flows from an inlet to an outlet.

In accordance with embodiments of the present disclosure, plate-fin coalescers are provided to improve water extraction and removal from an air supply that is processed for delivery to occupied spaces of an aircraft (e.g., cabin, cockpit, etc.). The plate-fin coalescers are formed of a set or stack of parallel fin layers separated by thin parting sheets. The fin layers are formed of thin sheet material that is arranged between the parting sheets to define tortuous parallel channels that extend from an inlet end to an outlet end of the plate-fin coalescer. To assemble the plate-fin coalescers, the fin layers and parting sheets are stacked and installed within a housing that contains the fin layers and parting sheets. The fin layers and parting sheets may be mechanically trapped within the housing, or may be bonded, brazed, fixed by fasteners, or the like.

The specific features of the plate-fin coalescers may be set based on a particular application or system configuration. For example, a fin height, channel spacing, number of layers, and fin wave geometry can be adjusted to achieve a desired coalescence of the moisture output by a first stage turbine. The surface area, channel geometry, pressure drop (from inlet end to outlet end), and flow velocity are examples of features and characteristics that may be considered when designing a plate-fin coalescer in accordance with the present disclosure. In accordance with some non-limiting embodiments of the present disclosure, the fin layers and/or the parting sheets may be formed from aluminum or other metal or composite materials. In some non-limiting examples, the fin layers may be formed of sheets of material having dimensions of 0.05-0.10mm (0.002-0.004 inch) thickness and the parting sheets may be formed of material having a thickness of 0.25-0.51mm (0.010-0.020 inch). It will be appreciated that thinner or thicker material layers may be used without departing from the scope of the present disclosure, with such thicknesses based on material choices, size and geometry of the plate-fin coalescers, system requirements, operational parameters, and the like. In accordance with some embodiments, a swirl vane assembly may be arranged between the plate-fin coalescer and a water collector to impart a swirl into the outlet flow from the plate-fin coalescer.

In accordance with some embodiments of the present disclosure, and those directed to aerospace applications, volume is generally constrained by installation envelope and weight. Accordingly, the size, shape, geometry, dimensions, etc. of the plate-fin coalescers described herein may be set based on particular application and implementation requirements and/or limitations. The arrangement of fin layers, as noted above, may be a sinusoidal arrangement to define a tortuous path along which moist air is directed. A minimum of one sine wave may be required to ensure that the moist air impinges upon a surface of the fin layers. That is, in accordance with embodiments, of the present disclosure a direct line of sight flow path from an inlet to an outlet is avoided by implementation of the sinusoidal path provided by the fin layers. The more wave patterns can ensure that droplets of water will collide with the channel walls and thus coalesce. It will be appreciated that each sine cycle (wave shape) can improve the efficiency of the coalescer by providing increased surface area for impingement of moisture onto the walls of the sinusoidal flow paths defined by the fin layers.

It will be appreciated that in accordance with embodiments of the present disclosure, a sinusoidal fin element geometry may be employed with a controlled or predefined amplitude and frequency (which may vary based on design requirements). However, although a sinusoidal geometry is shown and discussed, it will be appreciated that other geometries of the fin layer elements and/or the tortuous flow paths may take other geometric shapes. For example, a stepwise or squared arrangement, a toothed or triangular arrangement, or the like may be employed without departing from the scope of the present disclosure, and the illustrative configurations are merely for explanatory and example purposes and are not intended to be limiting. That is, the tortuous flow paths may be defined by any appropriate geometry shape, with the configuration arranged to ensure that moisture carrying on the airflow will impinge upon and/or coalesce into droplets that can then be removed by a downstream water separator, or the like.

Additionally, although shown in the present disclosure (e.g., FIGS. 3A-3B), the headers are not limited to defining a ninety degree turn. That is, the incoming moist airflow and outgoing flow carrying coalesced moisture may not need to turn within the inlet/outlet headers, or the turning may be different than that illustrated. For example, and without limitation, in accordance with some embodiments, the 90 degree turns could potentially be rotated out of plane, angled at non-90 degree turns, curved, or may be arranged as straight (e.g., no turn in and out of the coalescer) headers. In some embodiments, turning vanes or other similar turning structures can provided within the headers to turn a flow to achieve a more uniform distribution in/out of the coalescer. In still further embodiments, the fin layers and/or the headers may be arranged with mitered layers that extend from the headers into the core structure for additional coalescing surface area. It will be appreciated that the terms inlet and outlet refer to incoming air and outgoing air through the plate-fin coalescer. In accordance with some embodiments, the plate-fin coalescers may not have a pre-defined inlet/out, but rather may have two open ends that are substantially similar, and thus no specific orientation or arrangement/direction may be required when installing the plate-fin coalescers into some systems, reducing risks of improper installation and/or errors associated with directional installation requirements.

Advantageously, embodiments described herein provide for improved water removal in aircraft environmental control systems. In accordance with embodiments of the present disclosure, plate-fin coalescers are provided to enable passive water coalescence within a duct of an air cycle machine, such as between a first stage turbine and a second stage turbine of the air cycle machine. Embodiments of the present disclosure provide improved water removal techniques while also reducing the number of components in an aircraft environmental control system. Embodiments of the present disclosure can eliminate the need for a crossflow heat exchanger to be used upstream of a water collector, thus simplifying the air cycle machine systems. Further, by eliminating such a heat exchanger, total weight and volume may be reduced as compared to system that rely upon a heat exchanger or other additional components and systems.

The use of the terms "a", "an", "the", and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. As used herein, the terms "about" and "substantially" are intended to include the degree of error associated with measurement of the particular quantity based upon the equipment available at the time of filing the application. For example, the terms may include a range of ± 8%, or 5%, or 2% of a given value or other percentage change as will be appreciated by those of skill in the art for the particular measurement and/or dimensions referred to herein.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description but is only limited by the scope of the appended claims.

## Claims

1. An aircraft air cycle machine comprising:
a first stage turbine (126) configured to receive and expand air;
a second stage turbine (132) configured to receive air from the first stage turbine (126);
a duct (204) arranged between the first stage turbine (126) and the second stage turbine (132); and
a plate-fin coalescer (210) arranged along the duct (204), the plate-fin coalescer (210) comprising:
a housing (302);
a first fin layer arranged within the housing (302);
a second fin layer arranged within the housing (302); and
a first parting sheet arranged between the first fin layer and the second fin layer,
wherein each of the first fin layer and the second fin layer comprise a plurality of fin elements (402) arranged in substantially parallel orientation relative an axis through the housing (302), and channels (408) are defined between adjacent fin elements of the plurality of fin elements (402) of each of the first fin layer and the second fin layer, and
wherein the channels (408) are tortuous channels such that moisture carried on a flow through the channels will impinge upon surfaces of the fin elements and coalesce into water droplets.

2. The aircraft air cycle machine of claim 1, wherein the plate-fin coalescer (210) comprising an inlet header and an outlet header, wherein the inlet header is configured to couple to the duct (204).

3. The aircraft air cycle machine of claim 2, further comprising a water separator (212) arranged downstream from the outlet header of the plate-fin coalescer (210).

4. The aircraft air cycle machine of claim 3, further comprising a swirl vane assembly (510) arranged between the outlet header of the plate-fin coalescer (210) and the water separator (212).

5. The aircraft air cycle machine of claim 4, wherein the swirl vane assembly (510) comprises at least one swirl vane (512) arranged to impart a swirl to an airflow exiting the outlet header of the plate-fin coalescer (210) prior to entering the water separator.

6. The aircraft air cycle machine of any preceding claim, wherein the plate-fin coalescer (210) further comprises:
a second parting sheet arranged within the housing (302); and
a third fin layer installed within the housing (302), wherein the second parting sheet is arranged between the second fin layer and the third fin layer.

7. The aircraft air cycle machine of any preceding claim, wherein each fin layer is formed from a sheet material having a thickness of 0.05-0.10mm (0.002-0.004 inch).

8. The aircraft air cycle machine of any preceding claim, wherein the parting sheet is formed of a sheet material having a thickness of 0.25-0.51mm (0.010-0.020 inch).

9. The aircraft air cycle machine of any preceding claim, wherein each fin element (402) is configured with a sinusoidal shape to define the tortuous channels having a sinusoidal shape.

10. The aircraft air cycle machine of any preceding claim, wherein each fin element (402) is configured with a shape to define the tortuous channels such that no line-of-sight path is defined along the channels from an inlet to an outlet thereof.

11. An aircraft environmental control system comprising:
a heat exchanger assembly (110) configured to receive ram air along a first path of the heat exchanger assembly and compressed air along a second path of the heat exchanger assembly, wherein the first path comprises a compressed air inlet on a first heat exchanger (112), and the compressed air is directed into the compressed air inlet, the compressed air being directed from the first heat exchanger into a second heat exchanger (114); and
an air cycle machine configured to receive the compressed air from an outlet of the second heat exchanger, wherein the air cycle machine comprises:
a first stage turbine (126) configured to receive and expand the compressed air received from the second heat exchanger;
a second stage turbine (132) configured to receive air from the first stage turbine (126);
a duct (204) arranged between the first stage turbine (126) and the second stage turbine (132); and
a plate-fin coalescer (210) arranged within the duct (204), the plate-fin coalescer (210) comprising:
a housing (302);
a first fin layer arranged within the housing (302);
a second fin layer arranged within the housing (302); and
a first parting sheet arranged between the first fin layer and the second fin layer,
wherein each of the first fin layer and the second fin layer comprise a plurality of fin elements (402) arranged in substantially parallel orientation relative an axis through the housing (302), and channels (406) are defined between adjacent fin elements of the plurality of fin elements (402) of each of the first fin layer and the second fin layer, and
wherein the channels (406) are tortuous channels such that moisture carried on a flow through the channels will impinge upon surfaces of the fin elements (402) and coalesce into water droplets.

12. The aircraft environmental control system of claim 11, wherein the plate-fin coalescer (210) comprising an inlet header and an outlet header, wherein the inlet header is configured to couple to the duct (204), and optionally further comprising a water separator (212) arranged downstream from the outlet header of the plate-fin coalesce, and optionally further comprising a swirl vane assembly (510) arranged between the outlet header of the plate-fin coalescer (210) and the water separator, and optionally wherein the swirl vane assembly comprises at least one swirl vane (512) arranged to impart a swirl to an airflow exiting the outlet header of the plate-fin coalescer (210) prior to entering the water separator.

13. The aircraft environmental control system of claim 11 or 12, wherein the plate-fin coalescer (210) further comprises:
a second parting sheet arranged within the housing (302); and
a third fin layer installed within the housing (302), wherein the second parting sheet is arranged between the second fin layer and the third fin layer.

14. The aircraft environmental control system of any of claims 11-13, wherein each fin layer is formed from a sheet material having a thickness of 0.05-0.10mm (0.002-0.004 inch); and/or wherein the parting sheet is formed of a sheet material having a thickness of 0.25-0.51mm (0.010-0.020 inch).

15. The aircraft environmental control system of any of claims 9-14, wherein each fin element (402) is configured with a sinusoidal shape to define the tortuous channels having a sinusoidal shape; and/or wherein each fin element (402) is configured with a shape to define the tortuous channels such that no line-of-sight path is defined along the channels from an inlet to an outlet thereof.
